# EUROPEAN PATENT SPECIFICATION

(11) **EP 2 416 880 B1**
(45) Date of publication and mention of the grant of the patent: **21.04.2021**
(21) Application number: 09807500.5
(22) Date of filing: 09.12.2009
(51) Int. Cl.: B01L 3/00, B01L 9/00, B65G 1/137, G01N 35/00

(54) **METHOD FOR STORAGE WITH ASSOCIATION OF VISUAL INDICATOR AND OBJECT SENSOR**
VERFAHREN ZUM LAGERN IN VERBINDUNG MIT EINER VISUELLEN ANZEIGE UND EINEM OBJEKTSENSOR
PROCÉDÉ DE STOCKAGE ASSOCIÉ À UN INDICATEUR VISUEL ET À UN CAPTEUR D'OBJET

(30) Priority: 09.04.2009 PT 10449809
(43) Date of publication of application: 15.02.2012
(73) Proprietor: Isens - Electrónica, Lda., 4050-460 Porto (PT)
(72) Inventor: GONÇALVES GUEDES, Pedro Ernesto, 4575-380 Pinheiro, Penafiel (PT)
(74) Representative: Teixeira de Carvalho, Anabela
(86) International application number: PCT/IB2009/055597
(87) International publication number: WO 2010/116216

(56) References cited:
- EP-A2- 0 258 565
- WO-A1-92/18400
- WO-A1-99/30824
- DE-A1- 3 803 324
- DE-A1-102006 016 562
- FR-A1- 2 649 511
- FR-A1- 2 892 821
- US-A- 3 908 800
- US-A1- 2004 153 207
- US-A1- 2006 000 296
- US-A1- 2006 051 239
- US-A1- 2008 055 084
- US-A1- 2008 065 264
- US-A1- 2009 026 907
- US-B1- 6 464 142

## Description

### Field of Invention

The present invention relates to the storage, indexing, placement and collection of objects, wherein the objects are test tubes, particularly laboratory samples, by detecting the position used to store a given object and visual indication of where they should be collected and optionally for placing the object.

### Summary of the invention

The present invention describes a storage system characterized by having at least an association of object sensor (2) and visual indicator (3); and by recording the location of an object when being stored thru the referenced object sensor, and by indicating the location of that object for its collection through this visual indicator.

The present invention has the feature to have at least one level of storage (1) that locates the object to be stored through a combination of object sensor (2) and visual indicator (3), and to have one or more levels of storage that identifies the object to be stored for common identification (5).

The present invention has the characteristics of:
store the objects in multiple units (1), each unit featuring multiple locations;
Identify the object to be stored with common identification (5),
Recording the location of an object to be stored through the presence sensor (2), and indicate the location of that object for its collection through the visual indicator (3).

A preferred implementation of the present invention has the characteristic of the object sensor being an infrared photodiode or a mechanical switch.

Another preferred implementation of the present invention has the characteristic of a common identification (5) be performed by linear barcode or two-dimensional barcode.

An even more preferred implementation of the present invention has the characteristic of those units (1) having: a communication device or wireless to a data processor (4) for operation of the system, visual indicators through light-emitting diodes (3), object sensors using infrared photodiodes (2), and power supply device.

A preferred implementation of the present invention has the characteristic of those units (1) have carriers for objects to be stored and the lights are placed adjacent to those objects, and those carriers are transparent or translucent, if the objects themselves are not enough transparent so the light could be visible.

Another implementation of the present invention has the feature to record the exchange of location of an object when collected and stored in different locations through the inverse activation of the object sensors (2).

An implementation also preferred to the present invention has the characteristic of the object sensors (2) and the visual indicators (3) being organized in a matrix of rows and columns.

The present invention has application in laboratory storage of items wherein the items are test tubes.

The present invention has the advantages of allowing objects to be collected and stored in a practical and fast manner without the use of robotics or mechanical moving parts, thus allowing greater flexibility and simplicity.

### Background of the Invention

The preferred implementation of the present invention is related to the research laboratory samples, particularly blood tubes identified by barcode.

Thus the present invention is useful for increasing the speed of finding a specific tube. Can be applied in clinical laboratories for indexing tubes of blood and associate them to specific positions within the carrier also identified for further demand. It avoids the need for the use of robotic systems to solve the problem.

Clinical laboratories deal with hundreds of blood tubes identified by bar codes associated with different patients. This invention solves the problem that is the difficulty of finding a specific tube in the middle of hundreds.

The most common technique to solve this problem is through robotics. The Robot is responsible for arranging the tubes and also pick them as requested. These systems are very complex, expensive and difficult to configure.

The advantage of this invention over the existing, is the resolution of the problem without using robotics or mechanical moving parts, thus allowing greater flexibility and simplicity of the system.

The association of the array of sensors with the array of lights, combined with a reader's identification of objects, is one of the keys to the invention's originality.

The invention proposed here does not use robotics or mechanical moving parts. The technique consists of an array of sensors in conjunction with another array of visual indicators, including light emitting diodes, LEDs, working on tubes carrier. The array of sensors detects when a blood tube enters or exits, and the array of visual indicators is used to indicate the tube wanted.

Document US2006/051239, to which the preamble of claim 1 relates, discloses a sample handling apparatus for use with a processing apparatus that performs analytical processes on material in a plurality of sample holders, the sample handling apparatus comprising:
a reading apparatus that inputs information representing a machine readable identifier on individual sample holders containing a material to be used in analytical processes;
at least one carrier constructed and arranged to hold a plurality of individual sample holders at a plurality of unique locations; and
a control system that receives a signal from the reading apparatus corresponding to an identifier from an individual sample holder and correlates the sample holder with a specific location in a carrier so that results from analytical processes performed on sample material removed from the sample holder can be correlated with the sample holder.

Document WO 99/30824, to which the preamble of claim 1 also relates, discloses a loading station for loading items to a robotic system such that each of the items will be identified and located, the station comprising: a sensing panel on which the items are placed and which has a sensing arrangement for emitting a location data signal responsive to placing an item thereon, and being indicative of the item's location on the tray; a reading assembly for reading a sign allocated for each different item prior to placing it on the tray and emitting an identity data signal corresponding to said sign. Document WO 99/30824 discloses using the sensed locations for providing data to the robotic system, a manual collection of the items is not disclosed. The items are robotically removed as the system automatically correlates the item location with item contents, having the previously stored identification and location of the items.

Document US3908800 discloses an item selecting system for retrieving objects in storage compartments, wherein a plurality of cartons is brought to the indicated position for receiving the items which are to be selected. The system comprises a computing means for reading a batch of customer order data including item identity and quantity and arranging said data in warehouse location sequence; a memory unit means coupled to said computing means for reading and storing said sequenced data; display means coupled to said memory for displaying total pick quantity and item location and other identity.

Document US2008065264 discloses a medical resource storage and management apparatus comprising:
medical resource detecting members which are arranged on the rack so as to alternate with the depressions in a direction in which the depressions are arranged, and each of which detects whether or not a medical resource is placed;
retrieval guidance members for visual guidance which are arranged on the rack so as to alternate with the depressions in a direction in which the depressions are arranged; and a control unit which manages the storage status of the medical resources, based on the detection by the medical resource detecting members and which operates one of the retrieval guidance members in response to an input designating retrieval.

### General description of the invention

A method of storage according to the present invention is characterised by the features recited in the characterising portion of claim 1.

The present invention relates to the storage, indexing, placement and collection of goods, the goods being test tubes, particularly laboratory samples, by detecting the position used to store a given object and visual indication of where they should be collected or optionally placed.

The technique consists of an array of sensors in conjunction with another array of visual indicators that work on a carrier for objects. The array of sensors detects when an object enters or exits, and the array of visual indicators is used to indicate the location of the object wanted.

The present invention relates to the storage of laboratory sample test tubes.

In this implementation, the tubes are placed in a unit which has an array of sensors and an array of visual indicators, in this case light (LED - light emitting diode). The array of sensors detects the placement of a tube (previously identified) in a given location and the association between the identification and location is recorded. To collect a tube, simply activate the indicator light corresponding to the tube wanted.

In another preferred implementation, we have multiple units with carriers that can be identified by a standard method such as RFID (radio frequency identification), or the very same way before, the presence of visual indicators in each unit and the detection sensors, which was the unit on which the tube was placed.

This procedure can be used in multiple levels of storage. For example, in a warehouse, the location of an object can be visually displayed, at distance and height of the shelf, the board and even the location within each tray or carrier.

Itis a flexible technique that can be combined easily with the usual techniques of identification. In fact, assigning the identification at a given structured storage level is always possible with barcode or RFID.

It is the combination of two techniques - a combination of visual indicator and object sensor with a usual method of identification - which gives the highest efficiencies and cost saves.

When, due to issues of density or size, the traditional identification systems show higher limitations, the present invention allows even greater gains, such as, for example, the case of blood tubes.

According to the invention, we used units with electronic devices of the arrays mentioned above. On these units are placed carriers, for example, of 90 tubes each. These carriers are identified by "RFID" labels to support the unique identification.

More units can be added depending of the laboratory needs.

For example, if a laboratory works with 450 tubes per day, then it will need at least five (450/90) units.

In addition to the systematic search of the tubes every day, this system organizes the long storage of samples. Most of laboratories have storage of samples for long periods, but without effective systems for managing them.

Because the carriers of the tubes have identification, for instance with unique "RFID", the computer software keeps track of the history of all tubes and carriers that have been read with this system.

The identification of the tubes is made manually in a common barcode reader and the tube is placed by the user on any hole of any carrier (which is on a unit).

When the computer software detects a new barcode identification, it waits for a sensor to change from free to occupied. When this happens, the identification is linked with the position detected in the carrier affected.

### Description of Pictures

For an easier understanding of the invention, some pictures are attached, which represent preferred realizations of the invention, which, however, are not intended to limit the scope of this invention.
Picture 1: Schematic representation of a unit (1), showing a sensor array (2) and light array (3).
Picture 2: Schematic representation of a unit (1), showing the data processor (4) and a traditional identification reader (5).
Picture 3: Schematic representation of the location method, and collection method of an object.

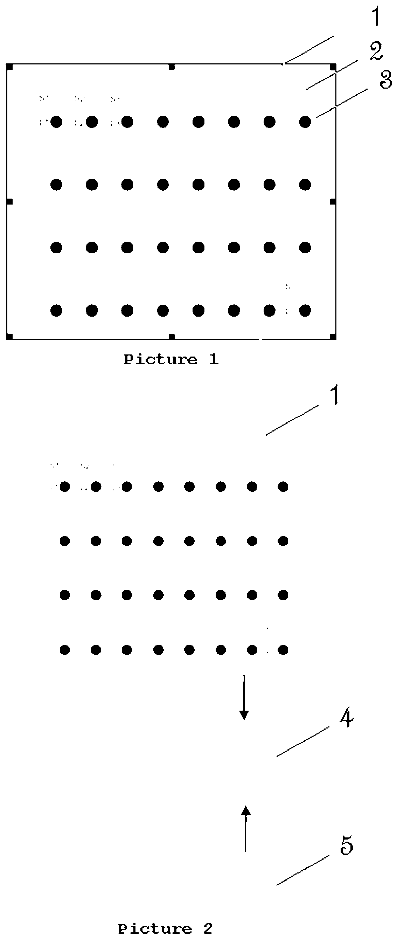

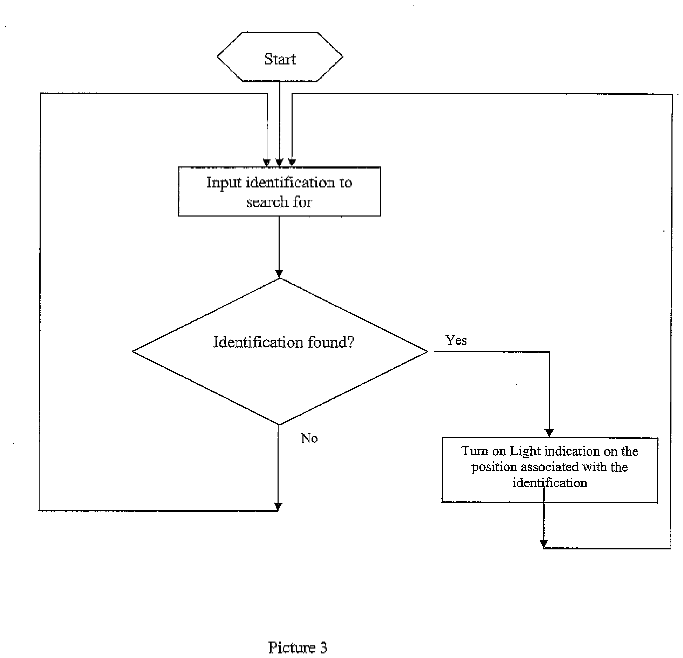

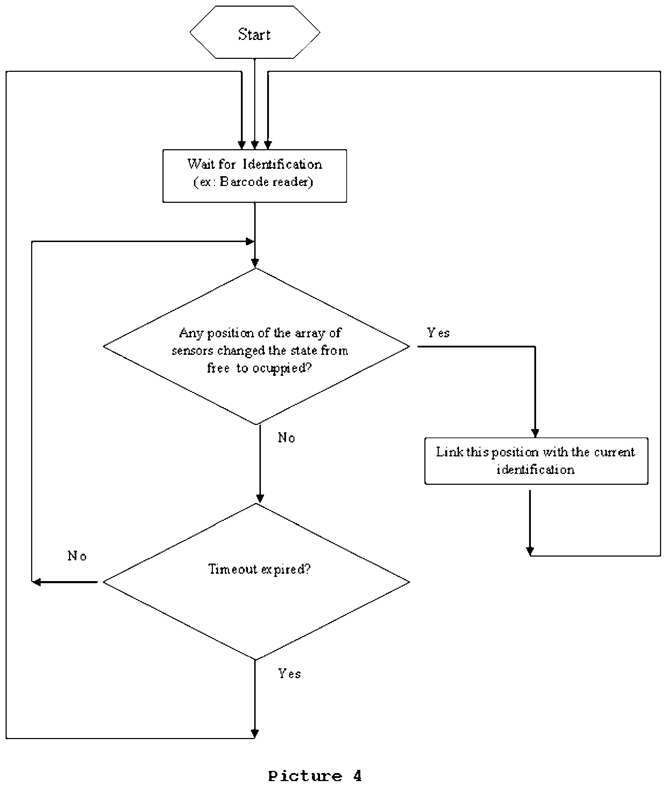

Figure 4: Schematic representation of the method to store an object.

## Claims

1. Method of storage having the steps of registering, using a sensor, the location of a test tube to be stored in a storage device, and indicating the location of that test tube, for its collection, through a visual indicator associated with that sensor, said storage device comprising:
a data processor (4);
test tubes identified by barcodes,
multiple units (1), each unit having multiple locations for storing the test tubes, and comprising an array of sensors (2) for detecting the presence of a test tube at each location, and a corresponding array of visual indicators (3);
a carrier identified by RFID, said carrier comprising holes where the test tubes are placed;
wherein the units have a communication device connected to the data processor; and
a barcode reader (5);
the method comprising the following steps:
identifying a test tube with the barcode reader;
manually placing the test tube on any hole of any carrier located in one of said units (1) and detecting the placement of the test tube in the corresponding location using the corresponding sensor;
recording, in the data processor, the location of the test tube and associating the identification of the test tube with said location;
wherein the method further comprises the step where a test tube to be collected is identified, and in response thereto, the data processor activates the visual indicator corresponding to the test tube to be collected.

2. Method according to any of the previous claims, wherein the sensor is an infrared photodiode or a mechanical switch.

3. Method according to any of the previous claims, wherein the visual indicators (3) are lights placed adjacent to the test tubes, and the carrier is transparent or translucent such the visual indicator light is visible when activated even if the test tubes are not transparent enough for the visual indicator light to be visible.

4. Method according to any of the previous claims, wherein the object sensors (2) and the visual indicators (3) are arranged in a matrix of rows and columns.

## Patentansprüche

1. Lagerverfahren mit den Schritten Registrieren des Standortes eines Reagenzglases in einer Lagervorrichtung unter Verwendung eines Sensors, sowie Anzeige des Standortes dieses Reagenzglases für dessen Entnahme über eine visuelle Anzeige für den Sensor, wobei die genannte Lagervorrichtung umfasst:
einen Datenprozessor (4);
durch Strichcodes gekennzeichnete Reagenzgläser;
mehrere Einheiten (1), wobei jedes Element mehrere Standorte zur Lagerung der Reagenzgläser sowie eine Sensoranordnung (2) zum Erfassen des Vorhandenseins eines Reagenzglases an dem jeweiligen Standort und eine entsprechende Anordnung visueller Anzeigen (3) umfasst;
einen über RFID kenntlich gemachten Träger, wobei besagter Träger Öffnungen zur Platzierung der Reagenzgläser umfasst;
wobei die Einheiten mit einer Kommunikationseinrichtung ausgestattet sind, die mit dem Datenprozessor verbunden ist; und
ein Strichcode-Lesegerät (5);
das Verfahren die folgenden Schritte umfasst:
Identifiziere eines Reagenzglases über das Strichcode-Lesegerät;
manuelles Absetzen des Reagenzglases in einer beliebigen Öffnung eines beliebigen Trägers, der sich in einer der genannten Einheiten (1) befindet, und Erfassen der Platzierung des Reagenzglases an dem entsprechenden Standort mit Hilfe des entsprechenden Sensors;
Erfassen des Standortes des Reagenzglases im Datenprozessor und Zuordnen der Kennzeichnung des Reagenzglases zu dem genannten Standort;
wobei das Verfahren ferner den Schritt umfasst, bei dem ein aufzunehmendes Reagenzglas identifiziert wird und der Datenprozessor als Reaktion hierauf die dem aufzunehmenden Reagenzglas entsprechende visuelle Anzeige aktiviert.

2. Verfahren nach einem der vorangehenden Ansprüche, bei dem der Sensor eine Infrarot-Photodiode oder ein mechanischer Schalter ist.

3. Verfahren nach einem der vorangehenden Ansprüche, wobei die visuellen Anzeigen (3) Lichter sind, die neben den Reagenzgläsern angeordnet sind, und der Träger transparent oder lichtdurchlässig ist, sodass das Licht der visuellen Anzeige, wenn es aktiviert wird, sichtbar ist, auch wenn die Reagenzgläser nicht transparent genug sind, damit das Licht der visuellen Anzeige sichtbar ist.

4. Verfahren nach einem der vorangehenden Ansprüche, bei dem die Objektsensoren (2) und die visuellen Anzeigen (3) in einer Matrix mit Zeilen und Spalten angeordnet sind.

## Revendications

1. Procédé de stockage comprenant les étapes d'enregistrer, utilisant un capteur, la localisation d'un tube de test devant être stocké dans un dispositif de stockage, et indiquer la localisation de ce tube de test, pour sa collecte, à travers un indicateur visuel associé à ce capteur, ledit dispositif de stockage comprenant :
un traiteur de données (4);
des tubes de test identifiés par des codes barre,
des unités multiples (1), chaque unité disposant de plusieurs localisations pour stocker les tubes de test, et comprenant une panoplie de capteurs (2) pour détecter la présence d'un tube de test à chaque localisation, et une panoplie correspondante d'indicateurs visuels (3);
un transporteur identifié par RFID, ledit transporteur comprenant des trous dans lesquels les tubes sont placés;
dans lequel les unités ont un dispositif de communication connecté au traiteur de données; et
un lecteur de code barre (5);
le procédé comprenant les étapes suivantes:
identifier un tube de test avec le lecteur de code barre;
placer manuellement le tube de test dans l'un quelconque des trous de l'un quelconque des transporteurs placés dans l'une desdites unités (1) et détecter le placement du tube de test dans la localisation correspondante à l'aide du capteur correspondant;
enregistrer, dans le traiteur de données, la localisation du tube de test et associer l'identification du tube de test à ladite localisation;
dans lequel le procédé comprend également l'étape lors de laquelle le tube de test devant être collecté est identifié, et en réponse à ceci, le traiteur de données active l'indicateur visuel correspondant au tube de test devant être collecté.

2. Procédé selon l'une quelconque des revendications précédentes, dans lequel le capteur est un photodiode infrarouge ou un interrupteur mécanique.

3. Procédé selon l'une quelconque des revendications précédentes, dans lequel les indicateurs visuels (3) sont des lumières placées de façon adjacente aux tubes de test, et le transporteur est transparent ou translucide de façon à ce que la lumière de l'indicateur visuel soit visible lorsqu'il est activé, même si les tubes de test ne sont pas suffisamment transparents pour que la lumière de l'indicateur visuel soit visible.

4. Procédé selon l'une quelconque des revendications précédentes, dans lequel les capteurs d'objet (2) et les indicateurs visuels (3) sont disposés dans une matrice de lignes et colonnes.
